# EUROPÄISCHE PATENTSCHRIFT

(11) **EP 3 538 470 B1**
(45) Veröffentlichungstag und Bekanntmachung des Hinweises auf die Patenterteilung: **13.03.2024**
(21) Anmeldenummer: 17794957.5
(22) Anmeldetag: 08.11.2017
(51) Int. Cl.: B66C 13/46, B66C 19/00, G01S 5/02, G05D 1/02

(54) **SYSTEM ZUR FUNKORTUNG EINES TRANSPORTFAHRZEUGS FÜR CONTAINER**
RADIO-LOCATION SYSTEM FOR DETERMINING THE LOCATION OF A TRANSPORTATION VEHICLE FOR CONTAINERS
SYSTÈME DE RADIOLOCALISATION D'UN VÉHICULE DE TRANSPORT POUR CONTENEURS

(30) Priorität: 08.11.2016 DE 102016121328; 21.04.2017 DE 102017108608
(43) Veröffentlichungstag der Anmeldung: 18.09.2019
(73) Patentinhaber: Konecranes Global Corporation, 05830 Hyvinkää (FI)
(72) Erfinder: KLEMENT, Stefan, 97222 Rimpar (DE); WIESCHEMANN, Armin, 46119 Oberhausen (DE); ALDEJOHANN, Stefan, 40764 Langenfeld (DE); SCHULZ, Heiko, 51381 Leverkusen (DE); SCHMIDT-EWIG, Jan Philip, 45239 Essen (DE); EICHNER, Heinz, 40878 Ratingen (DE); AHMADIAN, Mohammad, 41468 Neuss (DE)
(74) Vertreter: Moser Götze & Partner Patentanwälte mbB
(86) Internationale Anmeldenummer: PCT/EP2017/078592
(87) Internationale Veröffentlichungsnummer: WO 2018/087141

(56) Entgegenhaltungen:
- WO-A1-98/34127
- WO-A1-2004/027927
- DE-B3-102008 011 539
- US-A1- 2003 028 323
- US-A1- 2013 190 963
- US-B1- 7 032 763

## Beschreibung

Die Erfindung betrifft ein System zur Funkortung eines Transportfahrzeugs für Container gemäß dem Oberbegriff von Anspruch 1.

Transportfahrzeuge im Sinne der vorliegenden Erfindung können Portalhubstapler oder als Schwerlastfahrzeuge ausgebildete Flurförderfahrzeuge sein, die für die Handhabung und/oder den Transport von Containern, insbesondere als rein innerbetriebliche beziehungsweise interne Fahrzeuge in Containerterminals zum Umschlag von Containern, ausgelegt sind. Die zu transportierenden beziehungsweise handzuhabenden Container können dementsprechend insbesondere im Fall von ISO-Containern im beladenen Zustand bis zu 40 t wiegen und normierte oder zumindest standardisierte Längen von zum Beispiel 10, 20, 40, 45, 53 oder 60 Fuß aufweisen. Die beiden letztgenannten Längen werden bisher als nicht ISO genormte Container ausschließlich in Nordamerika eingesetzt. In diesem Zusammenhang werden unter ISO-Containern genormte Großraum- beziehungsweise Seefrachtcontainer verstanden, die im internationalen Warenverkehr zum Einsatz kommen. In diesem Zusammenhang können Container auch andere normierte oder zumindest standardisierte Ladungsträger wie beispielsweise Wechselaufbauten, insbesondere Wechselbehälter oder Wechselbrücken, sein.

Transportfahrzeuge in Form der genannten Schwerlastfahrzeuge werden auch als Terminal Truck oder Terminal Tractor bezeichnet, da sie zusammen mit einem oder mehreren Anhängern als eine Art Sattelzug eingesetzt werden. Die Ladefläche der Anhänger ist von Führungselementen begrenzt. Die zueinander beabstandeten Führungselemente werden auch als Einweiser bezeichnet und führen einen aufzunehmenden Container beziehungsweise dessen Eckbeschläge auf die Ladefläche. Hierfür erstrecken sich die Führungselemente mit ihren Führungsflächen schräg nach außen und oben von der Ladefläche weg. Derartige Transportfahrzeuge sind beispielsweise aus DE 10 2012 108 768 A1 bekannt. Andersartige Transportfahrzeuge für Container sind aus der US 9 522 623 B2 bekannt.

Aus der Gebrauchsmusterschrift DE 20 2007 016 156 U1 ist ein als Portalhubstapler ausgebildetes Transportfahrzeug mit automatischer Lenkung zum Transportieren und Stapeln von Containern bekannt, die eingesetzt wird, um einen Fahrer des Portalhubstaplers beim Fahren beziehungsweise Lenken zu unterstützen. Der Portalhubstapler weist in üblicher Weise zwei nebeneinander angeordnete und seitlich voneinander beabstandete Fahrträger mit jeweils mehreren lenkbaren Rädern auf. Auf den Fahrträgern stützt sich ein u-förmiger Portalrahmen ab, an dem ein Lastaufnahmemittel in Form eines Spreaders für Container vertikal heb- und senkbar ist. Mit dem Spreader können Container aufgenommen, angehoben, transportiert, abgesenkt und abgestellt werden sowie hierbei gestapelt oder entstapelt werden. Hierfür müssen die Portalstapler häufig über lange, gestapelte Containerreihen gelenkt werden, wobei die Fahrträger rechts und links vom jeweils überfahrenen Container und in schmalen Gassen zwischen den Containerreihen verfahren werden. Um einen Fahrer des Portalhubstaplers beim Fahren beziehungsweise Lenken zu unterstützen, wird eine automatische Lenkung eingesetzt. Diese automatische Lenkung umfasst einen vorne an einem der Fahrträger und somit seitlich versetzt zu dem jeweiligen überfahrenen Container angeordneten Laserscanner, aus dessen Messsignalen ein Abstand zwischen dem Fahrträger und einer Seitenwand des Containers bestimmt wird. Dies geschieht, indem der Laserscanner Laserstrahlen in horizontale Richtungen in einem Winkelbereich zwischen der Längsachse des Fahrträgers und der Seitenwand des Containers von etwa 55 Grad sendet und diese von einem Hindernis beispielsweise in Form der Seitenwand vor und seitlich des Fahrträgers reflektiert werden. Aus einem Laufzeitunterschied zwischen gesendetem und reflektiertem Strahl wird dann die Entfernung zu dem Hindernis berechnet. Die so gemessenen Entfernungen zur Seitenwand des vorgelagerten Containers und die zugehörigen Messwinkel werden dann an eine elektronische Steuerung übermittelt, die hieraus den Abstand zwischen Fahrträger und Seitenwand des Containers berechnet. Diese Abstände werden für die automatische Lenkung verwendet und hiervon ausgehend Soll-Lenkwinkel zum Einschlagen der Räder berechnet und an einen Lenkrechner übermittelt, der das Einschlagen der Räder steuert.

Neben dieser automatischen Lenkung mittels Laserscanner, die eine Positionsbestimmung des Portalhubstapler relativ zu einem abgestellten Container im Zentimeterbereich bei geringem Aufwand ermöglicht, können die Portalhubstapler auch mit Navigationssystemen ausgerüstet sein, die von der Navigation von fahrerlosen Flurförderfahrzeugen allgemein bekannt sind. Hierbei handelt es sich um die folgenden Einzelsysteme oder Kombinationen hiervon: Satellitennavigation (differentielles GPS), Radarnavigation, Trägheitsnavigation (Gyroskope), Transpondernavigation (mit im Boden eingelassen Transpondern oder Magneten und Antennen am Fahrzeug) oder Leitdrahtnavigation.

Ein System mit den Merkmalen des Oberbegriffs des Anspruchs 1 ist aus der DE 10 2008 011 539 B3 bekannt. Sie offenbart einen vollautomatischen, fahrerlosen Portalhubstapler mit einem lokalen Funkortungssystem, welches mit einer Vielzahl von auf der zu befahrenden Betriebsfläche angeordneten Funktranspondern korrespondiert. Am Portalhubstapler angeordnete Laserscanner ermöglichen den Betrieb einer automatischen Lenkung, wenn der Portalhubstapler über einem Containerstapel fährt.

Aus der europäischen Patentschrift EP 1 547 196 B1 ist ein Funkortungssystem mit einem terrestrischen Netzwerk mehrerer aktiver Ortsmarken und eines Empfängers bekannt, welcher Positionssignale der Ortsmarken über eine spezielle Richtantenne empfängt. Dieses Funkortungssystem und hiervon verwendete Algorithmen sind vom Grundsatz mit einem GPS-Ortungssystem vergleichbar, wobei anstatt von Satelliten ortsfeste Sender in Form der sogenannten aktiven Ortsmarken verwendet werden. Das Funkortungssystem kann ein GPS-Ortungssystem ergänzen oder unabhängig hiervon eingesetzt werden, wenn ein GPS-Ortungssystem nicht vorhanden oder unzuverlässig ist. Die aktiven Ortsmarken sind terrestrisch an definierten und somit absolut bekannten Positionen und im Vergleich zu Satelliten in einem geringeren Abstand zueinander netzwerkartig angeordnet. Durch die somit lokale Ausführung eines mit einem GPS-Ortungssystem vergleichbaren Funkortungssystems und die damit verbundene geringere Distanz zwischen den jeweiligen Sendern in Form der aktiven Ortsmarken und dem Empfänger mit der Richtantenne ist es möglich, Positionssignale zu erhalten und verwenden, die um ein Vielfaches stärker sind als GPS-Signale. Ein Einsatz im Innenbereich, Außenbereich, in der Stadt, in Lagern und Industrieanlagen ist daher möglich. Die Positionssignale werden jeweils als vorbestimmte Sequenzen mit einem Zeitmultiplexverfahren (TDMA für Time Division Multiple Access) in einem festen Zeitabschnitt je aktiver Ortsmarke übertragen und diese werden von einem Empfänger über die Richtantenne empfangen. Ein weiterer grundsätzlicher Vorteil liegt in der speziellen Richtantenne zum Empfang der Positionssignale, die als TDMA adaptive Richtantenne (TDMA Adaptive Directional Antenna Array) bekannt ist und welche im Zusammenhang mit einer besonderen Betriebsweise über den Empfänger in der Lage ist, Mehrwegsausbreitungen der Positionssignale von den aktiven Ortsmarken herauszufiltern. Hierzu wird ein Richtungsverstärkungsmuster erzeugt, das in einer Vielzahl von Richtungen sukzessiv gesteuert werden kann. Hierdurch kann die Richtantenne örtlich auf eine gerade sendende Ortsmarke beziehungsweise das gerade empfangene Positionssignal ausgerichtet werden. Diese Richtantenne ist über den Empfänger mit dem Netzwerk der Ortsmarken örtlich synchronisiert, das heißt sie kann sukzessive in eine Vielzahl von Richtungen ausgerichtet werden. Die örtliche Synchronisation erfolgt auf Basis von Positionsdaten der Ortsmarken, Ausrichtungsdaten der Richtantenne, welche durch ein Trägheitsnavigationssystem bestimmt werden, sowie Positionsdaten der Richtantenne, einer Netzwerkzeit und eventuellen Propagations-Verzögerungszeiten. Durch die Verwendung einer lokalen Netzwerkzeit ist das System von einer Zeitgebung durch Satelliten und damit verbundenen eventuellen Ungenauigkeiten unabhängig. Ferner findet eine zeitliche Synchronisierung zwischen den Positionssignalen der aktiven Ortsmarken statt. Dies geschieht selbstständig, das heißt ohne Unterstützung durch Satelliten, externe Kontrollmechanismen oder eines Referenznetzwerks. Die Ortsmarken senden dabei in einer festgelegten Reihenfolge, so dass jedem Sender ein Zeitfenster für die Übertragung zugeordnet ist. Durch diese vorteilhaften Eigenschaften dieses Funkortungssystems mit aktiven Ortsmarken können Funk-Mehrwegsausbreitungen vermindert und das Signal-Rausch-Verhältnis verbessert werden. Dies hat eine hohe Messgenauigkeit für die Position zur Folge. Bei herkömmlichen Funkortungssystemen kann es zu sogenanntem Mehrwegsausbreitungen und hiermit verbundenen Mehrwegsempfang kommen. Dieser wird durch optische Effekte wie Reflexion, Brechung und Streuung, und damit verbundenen Vervielfältigungen des Positionssignals und hieraus resultierenden Ungenauigkeiten in der Positionsbestimmung hervorgerufen. Des Weiteren kann dieses Funkortungssystem mit geringem Aufwand um Ortsmarken erweitert werden, beispielsweise um einen größeren Arbeitsbereich abzudecken.

Aus der WO 2001/006401 A1 ist ein System zur Positionsbestimmung von lagernden oder in Bewegung befindlichen Gütern bekannt.

Die US 7,032,763,B1 offenbart ein auf GPS basierendes Ortungs- und Navigationssystem für Rubber Tire Gantry Cranes. Ein weiteres GPS-Ortungssystem für Rubber Tire Gantry Cranes ist aus der WO 98/34127 A1 bekannt.

Aus der US 2013 / 0 147 640 A1 ist der Einsatz von Laserscannern zur Positionierung und Ausrichtung von Fahrzeugen in einem Containerterminal bekannt.

In der US 2003/028323 A1 ist ein Warenlager mit Fahrzeugen zum Materialtransport innerhalb des Warenlagers beschrieben.

Aus der WO 2004/027927 A1 ist die Verwendung von TDMA adaptiven Richtantennen in einem Ortungssystem bekannt.

Die US 2013/190963 A1 offenbart Gabelhubwagen.

Aus der DE 10 2006 012 339 A1 und der DE 10 2008 059 365 A1 sind Ortungssysteme für Gabelstapler beziehungsweise Hubstapler bekannt.

Der Erfindung liegt die Aufgabe zugrunde, ein verbessertes System zur Funkortung eines Transportfahrzeugs für Container innerhalb eines Arbeitsbereichs zu schaffen.

Diese Aufgabe wird durch ein System mit den Merkmalen des Anspruches 1 gelöst. Vorteilhafte Ausgestaltungen der Erfindung sind in den abhängigen Ansprüchen 2 und 3 und der nachfolgenden Beschreibung angegeben.

Erfindungsgemäß wird ein verbessertes System zur Funkortung eines Transportfahrzeugs für Container innerhalb eines Arbeitsbereichs eines Containerterminals zum Umschlag von Containern, mit einem Funkortungssystem umfassend mehrere aktive terrestrisch angeordnete und Positionsdaten sendende Ortsmarken, die Positionsdaten empfangende Antennen, mindestens einem die empfangenen Positionsdaten verarbeitenden Empfänger und mit mindestens einem Transportfahrzeug für Container mit mindestens einer der Antennen mit Empfänger und einem die Positionsdaten in Fahranweisungen für das Transportfahrzeug umsetzenden Navigationsrechner, wobei das Transportfahrzeug ein Portalhubstapler für Container oder eine Zugmaschine für einen und/oder mit einem Anhänger mit einer von Führungselementen begrenzten Ladefläche für Container ist, dadurch geschaffen, dass an dem Transportfahrzeug mindestens zwei der Antennen angeordnet sind, welche die von den Ortsmarken gesendeten Positionsdaten jeweils getrennt voneinander empfangen, wobei die mindestens zwei Antennen voneinander beabstandet sind und der Navigationsrechner neben der Position des Transportfahrzeugs auch die Ausrichtung des Transportfahrzeugs aus den Positionsdaten der mindestens zwei Antennen ermittelt.

Nach einer ersten Variante der Erfindung ist hierbei vorgesehen, dass das Transportfahrzeug ein Portalhubstapler für Container ist. Dabei ist dann vorgesehen, dass an dem Portalhubstapler die mindestens zwei Antennen angeordnet sind, die mindestens zwei Antennen voneinander beabstandet sind und der Navigationsrechner neben der Position des Portalhubstaplers auch die Ausrichtung des Portalhubstaplers bezogen auf dessen Vorwärtsfahrtrichtung, insbesondere innerhalb des Arbeitsbereichs bezogen auf ein Koordinatensystem des Arbeitsbereichs, aus den Positionsdaten der mindestens zwei Antennen ermittelt. Durch die Verwendung von zwei Antennen kann vorteilhafter Weise auch die Ausrichtung des Portalhubstaplers bestimmt werden, wodurch insbesondere in Bezug auf die Handhabung von Containern eine Ausrichtung des Portalhubstaplers zu den Containern oder eine gezieltes Abstellen der Container erleichtert wird. Fahrer eines Portalhubstaplers können beim Lenken unterstützt werden oder der Portalhubstapler kann insgesamt automatisch geführt werden. Hiermit geht dann eine optimale Platzausnutzung von genau abgestellten Containern in einem Containerlager einher. Ein weiterer Vorteil der Verwendung von zwei Antennen ist auch darin zu sehen, dass Funkortungssysteme grundsätzlich Ungenauigkeiten wie Mehrwegausbreitung und Mehrdeutigkeit von Positionslösungen unterliegen. Durch die Kombination von zwei Antennen und somit von zwei Messsystemen in festem Abstand zueinander und der zugehörigen Positionsdaten kann die Genauigkeit als auch die Zeit für die Bestimmung einer genauen Positionslösung wesentlich verbessert werden.

Im Sinne der Erfindung gemäß der ersten Variante ist das Umsetzen der Positionsdaten in Fahranweisungen für den Portalhubstapler durch den Navigationsrechner so zu verstehen, dass je nach Betrieb des Portalhubstaplers manuell, halbautomatisch oder automatisch die Fahranweisungen in geeigneter Weise zur Verfügung gestellt werden, d. h. beispielsweise dem Fahrer als Anzeige oder einer automatischen Fahrzeugsteuerung als Sollwerte. Die Kombination von zwei Antennen und zwei Messsystemen ist daher besonders vorteilhaft für die automatische Fahrzeugsteuerung, da diese sehr präzise Positions- und auch Orientierungsdaten erfordert. Auch ist eine hohe Genauigkeit der Bestimmung der Positionsdaten erforderlich für die automatische Navigation des Portalhubstaplers auf einer vorgegebenen Route innerhalb des Arbeitsbereichs. Um Kollisionen innerhalb des Arbeitsbereichs zu vermeiden, ist daher eine Bestimmung der genauen Position des Portalhubstaplers in einer möglichst geringen Zeit erforderlich.

Nach einer zweiten Variante der Erfindung ist vorgesehen, dass das Transportfahrzeug eine Zugmaschine für einen Anhänger mit einer Ladefläche für Container ist. Dabei ist dann vorgesehen, dass an der Zugmaschine die mindestens zwei Antennen angeordnet sind, die mindestens zwei Antennen voneinander beabstandet sind und der Navigationsrechner neben der Position der Zugmaschine auch die Ausrichtung der Zugmaschine bezogen auf ein Koordinatensystem des Arbeitsbereichs aus den Positionsdaten der mindestens zwei Antennen ermittelt. Die Ausrichtung bezieht sich somit auch auf eine Fahrtrichtung im Sinne einer Soll-Fahrtrichtung der Zugmaschine. Durch die Verwendung von zwei Antennen kann vorteilhafter Weise auch die Ausrichtung des Transportfahrzeugs bestimmt werden, wenn das Transportfahrzeug auch einen an die Zugmaschine gekoppelten Anhänger umfasst. Dadurch ist insbesondere in Bezug auf die Handhabung von Containern eine Ausrichtung des Transportfahrzeugs zu den Umschlaggeräten für ein gezieltes Abstellen oder Aufnehmen der Container auf oder von dem Anhänger des Transportfahrzeugs erleichtert. In diesem Zusammenhang kann der Navigationsrechner den von einer Sensorik ermittelten Knickwinkel zwischen der Längsachse der Zugmaschine und der Längsachse des Anhängers verwenden, um auch die Position und Ausrichtung des Anhängers zu bestimmen. Fahrer eines Transportfahrzeugs können beim Lenken unterstützt werden oder das Transportfahrzeug kann insgesamt automatisch geführt werden. Hiermit geht dann eine optimale Platzausnutzung von Fahrspuren in dem Arbeitsbereich und Vermeidung von Kollisionen mit anderen Objekten, beispielsweise anderen Transportfahrzeugen, einher. Ein weiterer Vorteil der Verwendung von zwei Antennen ist auch darin zu sehen, dass Funkortungssysteme grundsätzlich Ungenauigkeiten wie Mehrwegausbreitung und Mehrdeutigkeit von Positionslösungen unterliegen. Durch die Kombination von zwei Antennen und somit von zwei Messsystemen in festem Abstand zueinander und der zugehörigen Positionsdaten kann die Genauigkeit als auch die Zeit für die Bestimmung einer genauen Positionslösung wesentlich verbessert werden.

Im Sinne der Erfindung gemäß der zweiten Variante ist das Umsetzen der Positionsdaten in Fahranweisungen für das Transportfahrzeug durch den Navigationsrechner so zu verstehen, dass je nach Betrieb des Transportfahrzeugs manuell, halbautomatisch oder automatisch die Fahranweisungen in geeigneter Weise zur Verfügung gestellt werden, d. h. beispielsweise dem Fahrer als Anzeige oder einer automatischen Fahrzeugsteuerung als Sollwerte. Die Kombination von zwei Antennen und zwei Messsystemen ist daher besonders vorteilhaft für die automatische Fahrzeugsteuerung, da diese sehr präzise Positions- und auch Orientierungsdaten im Sinne der Ausrichtung erfordert. Auch ist eine hohe Genauigkeit der Bestimmung der Positionsdaten erforderlich für die automatische Navigation des Transportfahrzeugs auf einer vorgegebenen Route innerhalb des Arbeitsbereichs. Um Kollisionen innerhalb des Arbeitsbereichs zu vermeiden, ist daher eine Bestimmung der genauen Position des Transportfahrzeugs in einer möglichst geringen Zeit erforderlich.

In vorteilhafter Weise ist vorgesehen, dass die Ortsmarken Positionssignale als vorbestimmte Sequenzen mit einem Zeitmultiplexverfahren aussenden.

Besonders vorteilhaft ist vorgesehen, dass die Antenne als TDMA adaptive Richtantenne ausgebildet ist. Hierdurch wird eine Ungenauigkeit durch Mehrwegausbreitung von Funksignalen vermindert.

Nachfolgend wird die Erfindung an Hand eines in einer Zeichnung dargestellten Ausführungsbeispiels zur ersten Variante und an Hand eines in einer Zeichnung dargestellten Ausführungsbeispiels zur zweiten Variante näher erläutert. Es zeigen:
Figur 1 eine Vorderansicht eines Portalhubstaplers,
Figur 2 eine Seitenansicht des Portalhubstaplers aus Figur 1,
Figur 3 eine Draufsicht auf den Portalhubstapler aus Figur 1 innerhalb eines Funkortungssystems mit aktiven Ortsmarken,
Figur 4 eine Seitenansicht eines Transportfahrzeugs in Form einer Zugmaschine,
Figur 5 eine schematische Ansicht eines Terminals zum Umschlag von Containern unter Einsatz der Transportfahrzeuge gemäß Figur 4,
Figur 5a eine schematische Ansicht eines alternativen Terminals zum Umschlag von Containern unter Einsatz der Transportfahrzeuge gemäß Figur 4 und
Figur 6 eine Draufsicht auf das Transportfahrzeug aus Figur 4 innerhalb eines schematisch dargestellten Funkortungssystems mit aktiven Ortsmarken.

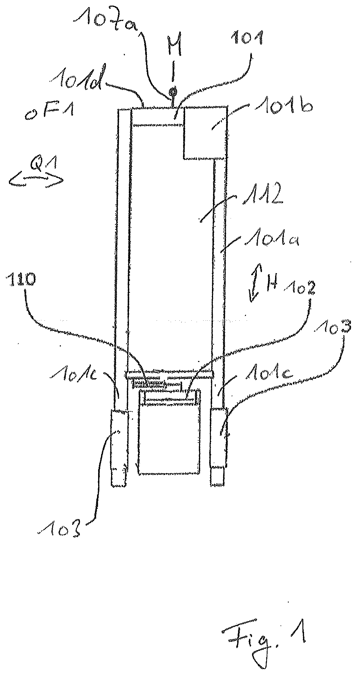

In Figur 1 ist ein mit 101 bezeichneter Portalhubstapler, der auch Straddle Carrier genannt wird, in einer Vorderansicht abgebildet. Der Portalhubstapler 101 umfasst im Wesentlichen einen nach unten offenen u-förmigen Portalrahmen 101a, ein Lastaufnahmemittel in Form eines sogenannten Spreaders 102 und zwei Fahrträger 103. Der Portalrahmen 101a mit dem Fahrträger 103 umschließt einen an drei Seiten und somit nach vorne, hinten und unten offenen Raum 112, welcher zumindest teilweise einen Container 106 oder zwei Container 105 und 106 in einer Vorwärtsfahrtrichtung F1 des Portalhubstaplers 101 gesehen hintereinander in sich aufnehmen kann. Der Spreader 102 ist entlang von vertikalen Portalstützen 101c des Portalrahmens 101a in einer Hub-/Senkrichtung H vertikal verfahrbar. Am unteren Ende der Portalstützen 101c schließen sich die beiden horizontalen Fahrträger 103 an. Für eine Ausrichtung des Spreaders 102 beziehungsweise des Containers 105, 106 in einer horizontalen Querrichtung Q1, die quer zur Vorwärtsfahrtrichtung F1 verläuft, und eine Drehung des Containers 105, 106 um eine vertikale Achse umfasst der Spreader 102 eine Seitenverschubeinheit 110.

Um neben einer Position auch eine Ausrichtung des Portalhubstaplers 101 - vorzugsweise bezogen auf dessen Vorwärtsfahrtrichtung F1 im Sinne einer Soll-Fahrtrichtung und dementsprechend bezogen auf ortsfeste Koordinaten eines Koordinatensystems eines Arbeitsbereichs - beispielsweise in einem Containerstapellager oder in einem seeseitigen Bereich eines Container-Terminals und somit zwischen dem Containerstapellager und Schiffsentladekranen und dort dann auch unter anderen Portalhubstaplern bestimmen zu können, befinden sich auf einer Oberseite 101d des Portalrahmens 101a mindestens zwei Antennen 107a und 107b, die in Vorwärtsfahrtrichtung F1 des Portalhubstaplers 101 gesehen hintereinander und voneinander beabstandet sind. Die Antennen 107a und 107b gehören zu einem Funkortungssystem 107. Bevorzugt sind die Antennen 107a und 107b im Bereich einer Mitte M der Oberseite des Portalhubstaplers angeordnet. Die mindestens zwei Antennen 107a und 107b können selbstverständlich auch in einer anderen vordefinierten und bekannten Position, beispielsweise rechts oder links auf der Oberseite 101d, an dem Portalhubstapler 101 angeordnet sein, solange diese in Bezug auf ein Koordinatensystem des Funkortungssystems 107 zur Positionsbestimmung voneinander beabstandet sind.

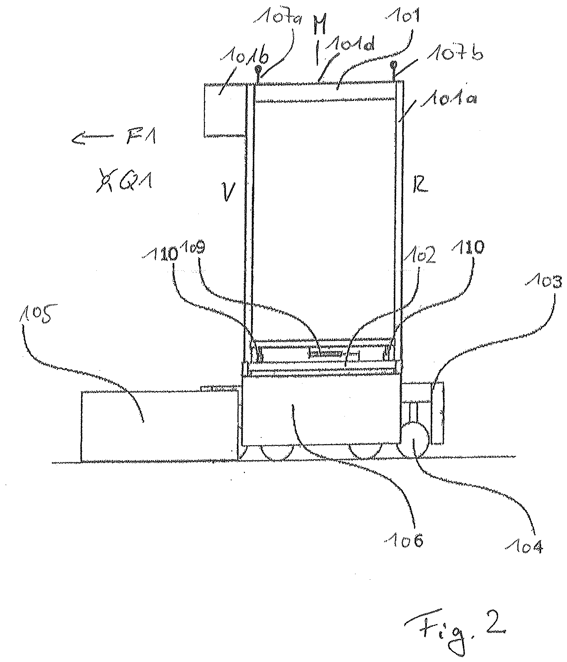

Die Figur 2 zeigt eine Seitenansicht des Portalhubstaplers 101 aus Figur 1, der neben der Seitenverschubeinheit 110 eine Längsverschubeinheit 109 für den Spreader 102 aufweist, welche zur Ausrichtung des Containers 106 in dessen Längsrichtung relativ zu dem Spreader 102 dient. Die Fahrträger 103, an denen Fahrantriebe 104 mit gummibereiften Rädern angeordnet sind, befinden sich jeweils an den unteren Enden des Portalrahmens 101a und fahren links und rechts von dem abgestellten und abzustellenden Containern 105, 106. Im oberen Bereich des Portalrahmens 101a und an der Vorderseite V, ist eine Fahrerkabine 101b angeordnet, von der aus ein Fahrer in Richtung der Vorwärtsfahrtrichtung F1 blickt und den Portalhubstapler 101 bedient. An der Oberseite 101d des Portalrahmens 101a befinden sich jeweils in Nähe der Vorderseite V und in Nähe der Hinterseite R vorn und hinten angeordnet die zwei Antennen 107a und 107b. Vorteilhaft ist eine Anordnung einer ersten Antenne 107a zu einer zweiten Antenne 107b an dem Portalhubstapler 101 mit maximalem Abstand zueinander; die beiden Antennen 107a und 107b können aber auch in geringerem Abstand angeordnet sein.

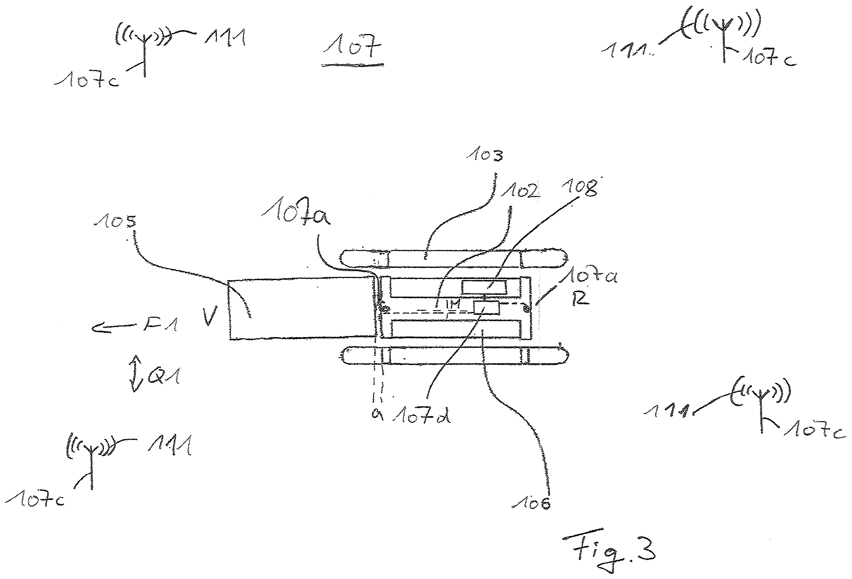

Die Figur 3 zeigt eine Draufsicht auf den Portalhubstapler 101 innerhalb eines schematisch dargestellten Funkortungssystems 107 mit aktiven Ortsmarken 107c. Es ist ersichtlich, dass der Portalhubstapler 101 mit dem Portalrahmen 101a einen Container 106 überfahren kann, welcher nach dem Überfahren entsprechend unterhalb des Spreaders 102 angeordnet ist. Der Spreader 102 ist H-förmig und kann den Container 106 über nicht dargestellte Twist-Locks in seinen vier Eckpunkten aufnehmen und anheben. Eine mittlere horizontale Längsachse des Spreaders 102 ist ebenfalls in Richtung der Vorwärtsfahrtrichtung F1 ausgerichtet, das heißt, dass der abzustellende Container 106 in Längsausrichtung unter und zu dem Portalrahmen 101a angeordnet ist. Alternativ kann der Spreader 102 ein sogenannter Twin-Lift-Spreader sein, welcher entlang seiner horizontalen Längsachse ausfahrbar ist und zwei hintereinander abgestellte Container aufnehmen kann. Die Antennen 107a und 107b können sich alternativ am äußeren vorderen und hinteren Rand des Spreaders 102 angeordnet sein.

Um einem Portalhubstapler 101 innerhalb eines Containerterminals Fahranweisungen zur Verfügung stellen zu können, die neben einer aktuellen absoluten Position auch die aktuelle Ausrichtung des Portalhubstaplers 101 beinhalten, ist das Funkortungssystem 107 mit den aktiven Ortsmarken 107c und mindestens zwei Antennen 107a, 107b je Portalhubstapler 101 vorgesehen. Dieses lokale Funkortungssystem 107 umfasst mehreren Ortsmarken 107c, welche auf dem Arbeitsgelände des Portalhubstaplers 101, beispielsweise in einem ContainerTerminal, verteilt und somit terrestrisch angeordnet sind. Das Funkortungssystem 107 stimmt vom Aufbau mit dem in der Beschreibungseinleitung als Stand der Technik beschriebenen Funkortungssystem überein. In Bezug auf das Ausführungsbeispiel und die Erfindung wird somit inhaltlich hierauf Bezug genommen. Mit Hilfe des Funkortungssystems 107 wird neben der absoluten Position auch die Ausrichtung des Portalhubstaplers 101 bestimmt, da die Positionsdaten über die erste Antenne 107a und die zweite Antenne 107b ausgewertet werden. Die Antennen 107a und 107b empfangen getrennt voneinander jeweils Positionsdaten 108 von den Ortsmarken 107c, die dann von einem gemeinsamen Empfänger 107d empfangen und verarbeitet werden. Selbstverständlich kann aber auch jeweils ein Empfänger 107d für die Antenne 107a und ein Empfänger 107d für die Antenne 107b verwendet werden. Die verarbeiteten Positionsdaten werden von dem Empfänger 107d an einen Navigationsrechner 108 weitergeleitet, der hieraus dann Fahranweisungen für den Portalhubstapler 101 bestimmt, beispielsweise zur automatischen Steuerung des Portalhubstaplers im Sinne eines fahrerlosen Verfahrens und Lenkens. Hierfür sind in dem Navigationsrechner 108 die Positionen der beiden Antennen 107a, 107b auf dem Portalhubstapler 101 hinterlegt, um hieraus die aktuelle Ausrichtung des Portalhubstaplers 101 bestimmen zu können. Die Positionen der beiden Antennen 107a, 107b kann mit Bezug zur Mitte M des Portalhubstaplers 101 hinterlegt sein. Der Navigationsrechner 108 berechnet aus den aktuellen Positionen der beiden Antennen 107a, 107b, welche beispielsweise jeweils eine x- und eine y-Koordinate in einem Koordinatensystem des Arbeitsgeländes des Portalhubstaplers 101 umfassen, eine Art Referenzposition des Portalhubstaplers 101 beispielweise bezogen auf dessen Mitte M und eine Ausrichtung des Portalhubstaplers 101 beziehungsweise dessen Längsachse im Sinne einer Vorwärtsfahrtrichtung F1 innerhalb des Koordinatensystems des Arbeitsgeländes. Diese Ausrichtung des Portalhubstaplers 101 entspricht einem Orientierungswinkel.

Im Folgenden wird die Erfindung anhand der Figuren 1, 2 und 3 erläutert. Der Portalhubstapler 101 wird von dem Fahrer über einen aufzunehmenden Container 106 gefahren. Mit dem Spreader 102 wird der Container 106 aufgenommen und angehoben. Der Fahrer verfährt darauf folgend den Portalhubstapler 101 in eine gewünschte Position, typischerweise an einem Containerübergabeplatz hinter einen bereits abgestellten Container 105 oder an einen anderen beliebigen Ort innerhalb eines Containerterminals und senkt den Spreader 102 zum Abstellen des Containers 106 wieder ab. Dabei wird der Portalhubstapler 101 vom Fahrer beispielsweise manuell auf die gewünschte Position gelenkt. Der Fahrer kann hierbei über das Funkortungssystem 107 mit Fahranweisungen unterstützt werden, das im über eine Anzeige mit Positionsdaten, Ausrichtungsdaten, Zielinformationen und Richtungsinformationen versorgt. Alternativ können neben einer manuellen Führung des Portalhubstapler 101 die Fahranweisungen des Funkortungssystems 107 auch für eine automatische Lenkung des Portalhubstaplers 101 beim Überfahren von Containern 105, 106 verwendet werden oder auch bei automatisch geführten und somit fahrerlosen Portalhubstaplern 101. Hierbei wird durch die beabstandete Anordnung der Antennen 107a und 107b, sowie die Bestimmung von Positionsdaten 111 an zwei Punkten eine hohe Genauigkeit der Positionsbestimmung erreicht, welche eine präzise Steuerung des automatisch geführten Portalhubstaplers 101 ermöglicht.

Ebenfalls möglich ist eine Navigation des Portalhubstaplers 101 auf vorgegebenen Routen innerhalb des Arbeitsbereichs. Dabei werden die Positionsdaten 111 des Portalhubstaplers mit in dem Navigationsrechner 108 hinterlegten Streckeninformationen abgeglichen und bei Abweichung von der vorgegebenen Route kann eine Korrektur erfolgen. Dies kann entweder mit manueller aber bevorzugt mit automatischer Steuerung erfolgen.

Entsprechend von ermittelten Positionsdaten des Portalhubstaplers 101 und den vorbestimmten Positionsdaten des abzustellenden Containers 105, 106 kann je nach Genauigkeit der von dem Portalhubstapler 101 angefahrenen Position die gewünschte Position für den abzusetzenden Container 106 entsprechend berechneter Stellwerte seitlich in Querrichtung Q1 und in Drehrichtung D um eine vertikale Achse durch die Seitenverschubeinheit 110 in seiner Position ausgerichtet und somit korrigiert werden. Ein gewünschter Abstand a zwischen abgestelltem Container 105 und abzustellendem Container 106 kann vor dem Abstellen des Containers 106 durch den Fahrantrieb 104 oder die Längsverschubeinheit 109 eingestellt werden.

Der Portalhubstapler 101 kann auch in einem sogenannten Twin-Lift-Betrieb betrieben werden. Hierbei ist der Spreader 102 ein sogenannter Twin-Lift-Spreader. Das bedeutet, dass der Spreader 102 zwei hintereinander angeordnete Container aufnehmen kann. Zu diesem Zweck ist der Spreader 102 entlang seiner horizontalen Längsachse ausfahrbar.

In Verbindung mit der vorliegenden Erfindung werden unter Containern ISO-Container verstanden. ISO-Container wiegen bis zu etwa 38 t und werden allgemein als genormte Großbehälter mit genormten Aufnahmepunkten oder -ecken für Lastaufnahmemittel verstanden. ISO-Container sind üblicherweise 20, 40 oder 45 Fuß lang. Auch ISO-Container in einer Länge von 53 Fuß gibt es bereits. Im Bereich der ISO-Container sind neben den geschlossenen Containern auch Kühl-Containersogenannte Reefer - und eine Vielzahl anderer Containertypen bekannt.

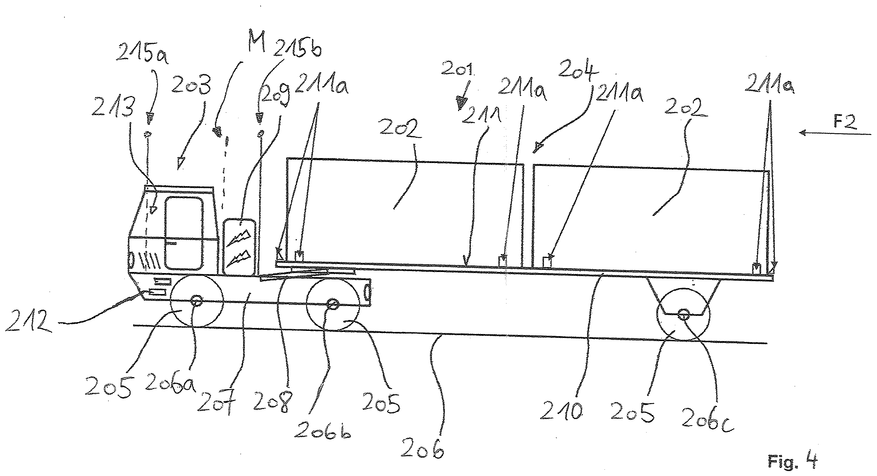

Die Figur 4 zeigt eine schematische Seitenansicht eines automatisch geführten Transportfahrzeugs 201 für Container 202. Das Transportfahrzeug 201 ist beispielhaft als Sattelzug ausgebildet und umfasst dementsprechend eine auch als Terminal Truck bezeichnete Zugmaschine 203 sowie einen daran angekoppelten Anhänger 204 in Form eines Aufliegers. Derartige Sattelzüge weisen in der Schwerlastausführung ein Gesamtzuggewicht von bis zu 200 t auf. Auch die Zugmaschine 203 für sich genommen und ohne Anhänger 204 stellt ein Transportfahrzeug 201 dar.

Das Transportfahrzeug 201 ist über Räder 205 frei auf einer Flurfläche 206 und damit flurgebunden, jedoch nicht schienengebunden verfahrbar. Dementsprechend ist das Transportfahrzeug 201 von Schienenfahrzeugen zu unterscheiden. Die Räder 205 sind jeweils mit einer Bereifung versehen, die vorzugsweise eine mit Luft befüllte Gummibereifung im Sinne von Pneus ist. Außerdem umfasst das Transportfahrzeug 201 einen Fahrantrieb mit mindestens einem als Elektromotor ausgebildeten Motor und einem Getriebe, um hierüber die Räder 205 anzutreiben. Der Motor und das Getriebe sind zur besseren Übersichtlichkeit nicht dargestellt. Grundsätzlich ist anstelle eines Elektromotors auch ein Verbrennungsmotor denkbar. Die Räder 205 sind in üblicher Weise an zwei Achsen 206a, 206b im Bereich der Zugmaschine 203 angeordnet. Wenn das Transportfahrzeug 201 als Sattelzug ausgebildet ist, sind auch an zumindest einer weiteren dritten Achse 206c des als Auflieger ausgebildeten Anhängers 204 Räder 205 angeordnet. Grundsätzlich ist es auch möglich, andere Achszahlen und Achsanordnungen mit entsprechender Anzahl von Rädern 205 vorzusehen, wenn dies technisch erforderlich ist.

Das Transportfahrzeug 201 beziehungsweise dessen Zugmaschine 203 umfasst ein Fahrgestell 207, an dem die Räder 205 über die vordere erste Achse 206a und die hintere zweite Achse 206b gelagert sind. Zudem ist im hinteren Bereich des Fahrgestells 207 eine Sattelplatte 208 angeordnet, die Bestandteil einer Sattelkupplung ist. Die Sattelplatte 208 kann über einen hydraulischen Antrieb heb- und senkbar ausgebildet sein, so dass die Zugmaschine 203 den Anhänger 204 aktiv und selbstständig an- beziehungsweise abkuppeln kann. Der hydraulische Hub der Sattelplatte 208 ermöglicht es, Sattellasten bis 45 t anzuheben. Auch ein andersartiges An- und Abkuppeln des Anhängers 204 ohne hydraulische Hubmöglichkeit ist denkbar, beispielsweise durch einen manuell betätigbaren Kupplungsmechanismus. Die Sattelplatte 208 kann auch derart gelenkartig ausgebildet sein, dass kein regelmäßiges Trennen von Zugmaschine 203 und Anhänger 204 vorgesehen ist und somit Zugmaschine 203 und Anhänger 204 dauerhaft zu einer festen Einheit in Form eines Sattelzugs verbindet. Außerdem trägt das Fahrgestell 207 eine Batterie 209, die den oder die Elektromotoren des Fahrantriebs des Transportfahrzeugs 201 speist und mit diesem mitbewegt wird. Die Batterie 209 ist vorzugsweise als wieder aufladbare Lithium-Ionen-Batterie oder als Bleibatterie ausgebildet und oberhalb des Fahrgestells 207 oder unterhalb desselben beispielsweise zwischen den beiden Achsen 206a, 206b angeordnet, um einen einfachen Austausch mit einer geladenen Batterie 209 zu ermöglichen. Alternativ kann auch an dem Anhänger 204 eine zusätzliche Batterie 209 zur Speisung des Fahrantriebs angeordnet und hierfür mit dem Fahrantrieb elektrisch verbunden sein.

Der als Auflieger ausgebildete Anhänger 204 weist keine am der Zugmaschine 203 zugewandten Ende angeordnete vordere Achse, sondern nur eine oder mehrere hintere Achsen 206c auf, die am von der Zugmaschine 203 abgewandten Ende unter einem Rahmen 210 des Anhängers 204 gelagert sind. Eine Art vordere Achse des Anhängers 204 wird jedoch durch die hintere Achse 206b der Zugmaschine 203 gebildet. Auch weist der Anhänger 204 nicht dargestellte und an seinem der Zugmaschine 203 zugewandten vorderen Ende angeordnete Stützen auf. Die Stützen sind zum Abstellen des Anhängers 204 nach erfolgtem Abkuppeln und je nach Ausgestaltung der Sattelplatte 208 zum Auf- und Absatteln eines als Auflieger ausgebildeten Anhängers 204 an der Zugmaschine 203 vorgesehen. Außerdem weist der Anhänger 204 keinen eigenen Antrieb auf.

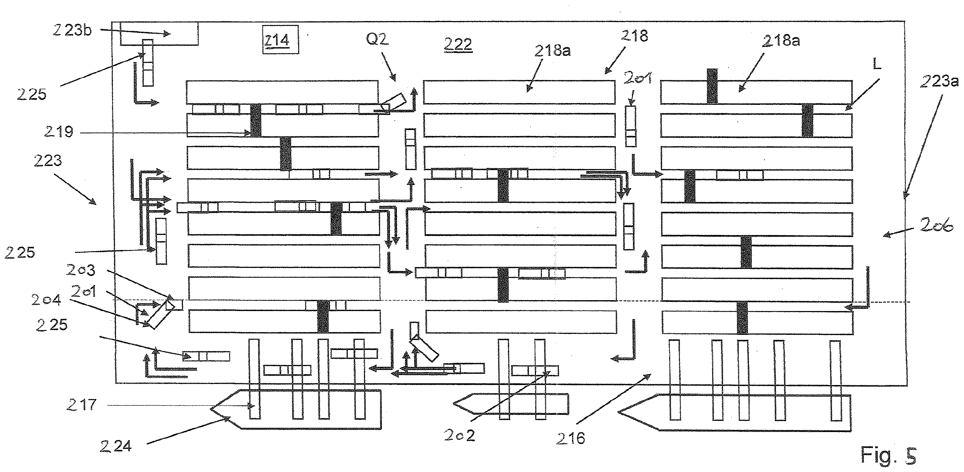

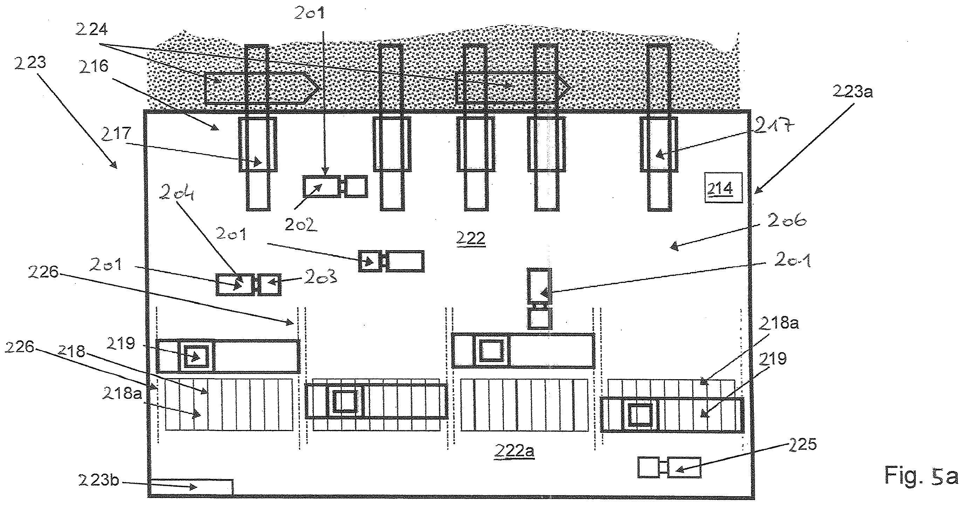

Des Weiteren weist das Transportfahrzeug 201 beziehungsweise dessen Anhänger 204 auf seinem Rahmen 210 eine im Wesentlichen ebene Ladefläche 211 für Container 202 auf. In der Figur 5 sind in Fahrtrichtung F2 des Transportfahrzeugs 201 gesehen hintereinander zwei als ISO-Container ausgebildete Container 202 mit einer Länge von etwa 20 Fuß abgestellt. ISO-Container im oben definierten Sinne haben genormte Eckbeschläge. Die Eckbeschläge können beispielsweise von dem als so genannter Spreaderrahmen ausgebildeten Lastaufnahmemittel eines Krans ergriffen werden um den ISO-Container von der Ladefläche 211 anzuheben oder auf dieser abzustellen.

Um einen zu transportierenden Container 202 und im Fall von ISO-Containern insbesondere dessen Eckbeschläge beim Absetzen auf der Ladefläche 211 führen und in Bezug auf die Ladefläche 211 ausrichten zu können, wird die Ladefläche 211 an ihren Seiten von mehreren Führungselementen 211a begrenzt. Die Führungselemente 211a weisen hierfür Führungsflächen mit einem schrägen Verlauf auf. Hierbei erstrecken sich die Führungsflächen von der Ladefläche 211 nach oben und außen weg gerichtet und zu der Ladefläche 211 nach unten und innen hin gerichtet. Vorzugsweise sind die Führungselemente 211a paarweise an gegenüberliegenden Seiten, insbesondere Längsseiten und/oder Schmalseiten, der Ladefläche 211 angeordnet. Die Führungsflächen eines Paars von Führungselementen 211a bilden eine Art Trichter, deren schräger Verlauf sich zur Ladefläche 211 hin verjüngt, um die Führungs- und Ausrichtfunktion zu realisieren. Dementsprechend erweitern sich die Führungsflächen eines Paars von Führungselementen 211a von der Ladefläche 211 nach oben weggerichtet.

Das Transportfahrzeug 201 ist im oben definierten Sinne automatisch geführt und weist hierfür eine in Figur 5 schematisch dargestellte Fahrzeugsteuerung 212 auf. Mittels der Fahrzeugsteuerung 212 sind die Fahrmanöver des Transportfahrzeugs 201 automatisch steuerbar, indem beispielsweise über ein Leitsystem geplante Transportaufträge ausgeführt und diesbezüglich vorgegebene Fahrtrouten steuerungstechnisch in entsprechende Fahrmanöver umgesetzt werden. In diesem Zusammenhang werden mittels der Fahrzeugsteuerung 212 Lenkvorgänge und Geschwindigkeiten sowie Beschleunigungen des Transportfahrzeugs 201 automatisch gesteuert. Des Weiteren kann das Transportfahrzeug 201 optional von einem Fahrer auch im oben definierten Sinne manuell geführt beziehungsweise gesteuert werden, so dass auch ein Wechsel zwischen manueller und automatischer Führung des Transportfahrzeugs 201 denkbar ist. Für die manuelle Variante ist im vorderen Bereich der Zugmaschine 203 eine Fahrerkabine 213 mit entsprechenden Steuerungsmitteln für einen manuellen Eingriff in die Fahrzeugsteuerung 212 angeordnet. Bei ausschließlich automatisch geführten Transportfahrzeugen 201 kann die Fahrerkabine 213 wie in Figur 4 dargestellt fahrerlos bleiben oder auch weggelassen werden.

Um neben einer Position auch eine Ausrichtung des Transportfahrzeugs 201 - vorzugsweise bezogen auf dessen Fahrtrichtung F2 im Sinne einer Soll-Fahrtrichtung und dementsprechend bezogen auf ortsfeste Koordinaten eines Koordinatensystems eines Arbeitsbereichs 222 - beispielsweise in einem Containerstapellager oder in einem bezogen auf das Containerstapellager wasserseitigen Bereich eines Container-Terminals auch unter anderen Transportfahrzeugen 201 bestimmen zu können, befinden sich an einer Oberseite des Transportfahrzeugs 201 mindestens zwei Antennen 215a und 215b, die in Längsrichtung des Transportfahrzeugs 201 gesehen hintereinander und voneinander beabstandet sind. Die Antennen 215a und 215b gehören zu einem Funkortungssystem 214. Bevorzugt sind die Antennen 215a und 215b mittig an der Oberseite der Zugmaschine 203 angeordnet. Die mindestens zwei Antennen 215a und 215b können selbstverständlich auch in einer anderen vordefinierten und bekannten Position, beispielsweise rechts oder links auf dem Fahrgestell 207 an der Zugmaschine 203 angeordnet sein, solange diese in Bezug auf ein Koordinatensystem des Funkortungssystems 214 zur Positionsbestimmung voneinander beabstandet sind. Vorteilhaft ist eine Anordnung einer ersten Antenne 215a zu einer zweiten Antenne 215b an der Zugmaschine 203 mit maximalem Abstand zueinander; die beiden Antennen 215a und 215b können aber auch in geringerem Abstand angeordnet sein. Die hintere Antenne 215b ist oberhalb der Sattelplatte 208 angeordnet, so dass sie auch bei maximalem Knickwinkel zwischen Zugmaschine 203 und dem Anhänger 204 den Bewegungsbereich des Anhängers 204 nicht beeinträchtigt. Im Falle eines manuell geführten Transportfahrzeugs 201 ist hierbei die Fahrerkabine 213 zwischen beiden Antennen 215a, 215b angeordnet.

In der Figur 5 ist schematisch eine Draufsicht auf ein beispielhaft als Hafenterminal ausgebildetes Terminal 223 zum Umschlag von Containern 202 unter Einsatz der vorbeschriebenen Transportfahrzeuge 201 gemäß Figur 4 gezeigt. Hierbei können an einem Kai 216 eines Hafens mehrere Schiffe 224 anlegen, um Container 202 anzuliefern oder abzuholen. Für das Beladen beziehungsweise Löschen der Schiffe 224 sind an dem Kai 216 Umschlaggeräte in Form von Containerbrücken 217 vorgesehen, die auch als Ship-to-Shore Krane (kurz: STS-Kran) bezeichnet werden und deren Ausleger sich einerseits über die Schiffe 224 und andererseits über den Kai 216 erstrecken. Alternativ kann das Beladen beziehungsweise Löschen der Schiffe 224 auch über so genannte Hafenkrane oder Hafenmobilkrane erfolgen, deren Ausleger hierbei um eine vertikale Achse über das entsprechende Schiff 224 verschwenkt wird. Dies gilt insbesondere wenn es sich um kleinere Terminals 223 beziehungsweise Arbeitsbereiche 222 handelt.

Das Terminal 223 ist über eine als Zaun oder Mauer ausgebildete Begrenzung 223a von seiner äußeren Umgebung abgegrenzt und nur über Passierbereiche 223b von im öffentlichen Verkehr fahrenden externen Transportfahrzeugen 225, beispielsweise konventionellen Lkw, erreichbar, um Container 202 abzuholen oder anzuliefern. Zum gezielten beziehungsweise kontrollierten Öffnen und Schließen jedes Passierbereichs 223b kann dort auch jeweils eine Sicherheitsschleuse zum An- und Abmelden einschließlich einer Identifikation der ein- und ausfahrenden externen Fahrzeuge und deren Fahrer vorgesehen sein.

Zudem umfasst das Terminal 223 innerhalb der Begrenzung 223a ein Container-Stapellager 218, in dem Container 202 zur kurzzeitigen Zwischenlagerung in mindestens einem auch als Stack bezeichneten Lagerbereich 218a gestapelt werden können. Dies kann der Fall sein, nachdem die Container 202 von den Schiffen 224 abgeladen wurden und bevor sie für den weiteren Transport außerhalb des Terminals 223 auf ein Straßen- oder Schienenfahrzeug geladen oder nachdem sie hiervon angeliefert wurden und bevor sie auf die Schiffe 224 geladen werden. Über die den Kai 216 des Hafens umfassende Flurfläche 206 verfahren die nicht für den öffentlichen Verkehr ausgelegten und zugelassenen internen Transportfahrzeuge 201, um die beispielsweise als ISO-Container ausgebildeten Container 202 zwischen den Containerbrücken 217 und den als Portalkranen ausgebildeten Container-Stapelkranen 219 des Container-Stapellagers 218 des Terminals 223 zu transportieren.

Üblicher Weise umfasst das Container-Stapellager 218 in einem derartigen Terminal 223 mehrere Lagerbereiche 218a, die jeweils reihenförmig beziehungsweise rasterartig nebeneinander und voneinander beabstandet angeordnet sind. In jedem Lagerbereich 218a können mehrere Reihen von Containern 202 mit ihren Längsseiten nebeneinander und je Reihe mehrere Container 202 übereinander abgestellt werden. Zum Bewirtschaften des Container-Stapellagers 218 beziehungsweise der jeweiligen Lagerbereiche 218a, das heißt zum dortigen Ein- und Auslagern von Containern 202, ist je Lagerbereich 218a des Container-Stapellagers 218 mindestens ein entsprechender Portalkran vorgesehen, um Container 202 zur Ein- oder Auslagerung in dem Container-Stapellager 218 von den Transportfahrzeugen 201 zu übernehmen oder an diese abzugeben. Die Umschlaggeräte darstellenden Portalkrane überspannen mit ihren von Portalstützen getragenen Kranträgern den entsprechenden Lagerbereich 218a und die darin gestapelten Container 202. Für das Ein- und Auslagern von Containern 202 können die Container-Stapelkrane 219 über den Lagerbereich 218a in dessen Längsrichtung hinweg verfahren. Die Transportfahrzeuge 201 verkehren hierbei in einem Arbeitsbereich 222 innerhalb der Begrenzung 223a des Terminals 223.

Innerhalb des Terminals 223 beziehungsweise dessen Arbeitsbereichs 222 erfolgt zum Transport von Containern 202 ein gemeinsamer und gleichzeitiger Betrieb von mindestens einem Transportfahrzeug 201, das im Sinne der obigen Definition ein internes und vorzugsweise automatisch geführtes Fahrzeug ist, und mindestens einem manuell geführten externen Transportfahrzeug 225, das beispielsweise ein für den öffentlichen Straßenverkehr zugelassener konventioneller Lkw oder Sattelzug sein kann. Auch Transportfahrzeuge 201 in der manuellen Variante des in Figur 4 beschriebenen Transportfahrzeugs 201 mit Fahrerkabine 205 können zusätzlich oder alternativ zu der automatisch geführten Variante in dem Arbeitsbereich 222 verkehren. Mittels der internen Transportfahrzeuge 201 erfolgt ein Transport der Container 202 zwischen dem Container-Stapellager 218 beziehungsweise dessen Umschlaggeräten und den am Kai 216 angeordneten Umschlaggeräten in Form der Containerbrücken 217 oder Hafenkrane beziehungsweise Hafenmobilkrane, mit denen die Container 202 zwischen den Transportfahrzeugen 201 und den Schiffen 224 umgeschlagen und dementsprechend die Transportfahrzeuge 201 am Kai 216 be- und entladen werden können. Mittels der externen Transportfahrzeuge 225 können Container 202 vom Container-Stapellager 218 beziehungsweise dessen Umschlaggerät für den weiteren Transport im öffentlichen Verkehr abgeholt oder nach einem Transport im öffentlichen Verkehr zur Zwischenlagerung im Container-Stapellager 218 angeliefert werden. Diese Transporte erfolgen jeweils in einem so genannten Horizontalverkehr.

Die den Lagerbereichen 218a als Umschlaggeräte zugeordneten Portalkrane sind in Figur 5 als so genannte gummibereifte Stapelkrane (Rubber-Tyred Gantry Crane - kurz: RTG) oder schienengebundene Stapelkrane (Rail-Mounted Gantry Crane - kurz: RMG) ausgebildet, die entweder von einer in einer Krankabine mitfahrenden Bedienperson manuell geführt beziehungsweise gesteuert werden oder (teil-) automatisiert geführt beziehungsweise gesteuert werden. Dementsprechend wird das in Figur 5 schematisch dargestellte Terminal 223 auch als RMG- beziehungsweise RTG-Terminal bezeichnet. Bei diesem Terminaltyp sind zwischen den sich parallel zum Rand des verlaufenden Kais 216 erstreckenden Lagerbereichen 218a geradlinige und rasterförmig angeordnete ein- oder mehrspurige Gassen L, Q2 vorgesehenen, in denen die internen Transportfahrzeuge 201 sowie die über den Passierbereich 223b in das Terminal 223 ein- und ausfahrenden externen Transportfahrzeuge 225 verkehren können. Das Beladen und Entladen der Transportfahrzeuge 201, 225 durch die Container-Stapelkrane 219 erfolgt in den entlang der Längsseiten führenden Längsgassen L der Lagerbereiche 218a. Dort sind als Übergabespuren beziehungsweise Übergabebereich dienende Fahrspuren für die Transportfahrzeuge 201, 225 vorgesehen, die von dem jeweiligen Container-Stapelkrane 219 ebenfalls überspannt werden. Durch die in Figur 5 dargestellten abgewinkelten Pfeile wird angedeutet, dass die Transportfahrzeuge 201, 225 über quer und insbesondere senkrecht zum Kai 216 verlaufende Quergassen Q2 beziehungsweise deren Fahrspuren in die Längsgassen L und die dortigen Übergabespuren hinfahren oder diese wieder verlassen können. Auch kann vorgesehen sein, dass die Container-Stapelkrane 219 mehrere in Längsrichtung benachbarte Lagerbereiche 218a, die durch eine Quergasse Q2 voneinander beabstandet sind, bewirtschaften und hierfür eine oder mehrere Quergassen Q2 überfahren. Alternativ kann jedem Lagerbereich 218a mindestens ein Container-Stapelkran 219 zugeordnet sein. Der Bereich des Kais 216 mit den dortigen Umschlaggeräten kann jedoch den internen Transportfahrzeugen 201 vorbehalten sein, weshalb entsprechende Barrieren oder Passierbereiche mit Sicherheitsschleusen innerhalb des Terminals 223 vorgesehen sein können. Dies ist durch die gestrichelte Linie in Figur 5 angedeutet.

In Figur 5a ist ein alternatives Terminal 223 dargestellt, das als so genanntes ASC-Terminal ausgebildet ist. Anders als bei dem in Figur 5 dargestellten Terminal 223 sind die Container-Stapelkrane 219 des Container-Stapellagers 218 hier als Portalkrane in Form so genannter automatisierter und schienengebundener Stapelkrane ausgebildet, die auch als Automated Stacking Crane - kurz: ASC bezeichnet werden. Bei diesem Terminaltyp sind zwischen den Lagerbereichen 218a lediglich schmale Gassen als Fahrwege für die ASCs vorgesehen. Die Fahrwege für umfassen Schienen 226, auf denen der jeweilige ASC verfahren und zwischen deren paarweiser Anordnung jeweils ein Lagerbereich 218a angeordnet ist. Diese Gassen sind nicht für eine Durchfahrt der Transportfahrzeuge 201 und 225 vorgesehen und hierfür in der Regel zu schmal. Anders als bei RMG- beziehungsweise RTG-Terminals erstrecken sich die Lagerbereiche 218a auch nicht entlang und insbesondere parallel, sondern üblicher Weise quer und insbesondere senkrecht zum Kai 216. Auch die Container-Stapelkrane 219 verfahren dementsprechend quer zum Kai 216. Des Weiteren weist das Container-Stapellager 218 des ASC-Terminals keine an den Längsseiten der Lagerbereiche 218a angeordneten Übergabespuren beziehungsweise Übergabebereiche auf. Stattdessen sind an den in Längsrichtung weisenden Längsenden des jeweiligen Lagerbereichs 218a kopfseitige Übergabebereiche vorgesehen. Der Arbeitsbereich 222 umfasst in einem derartigen ASC-Terminal einen bezüglich des Container-Stapellagers 218 wasserseitigen beziehungsweise kaiseitigen Umschlagbereich, der durch die vorbeschriebene Ausgestaltung des ASC-Terminals im regulären Betrieb des Terminals 223 von dem landseitigem Verkehr externer Transportfahrzeuge 225 im landseitigen Umschlagbereich 222a getrennt ist. Lediglich in besonderen Fällen, beispielsweise zu Wartungs- oder Reparaturzwecken, können Fahrzeuge zwischen dem wasserseitigen Umschlagbereich und dem landseitigen Umschlagbereich 222a verkehren, wofür dann Gassen mit ausreichender Breite genutzt werden können. Die Transportfahrzeuge 225 nutzen für die Einfahrt in den Umschlagbereich 222a beziehungsweise die Ausfahrt aus diesem einen Passierbereich 223b im obigen Sinne.

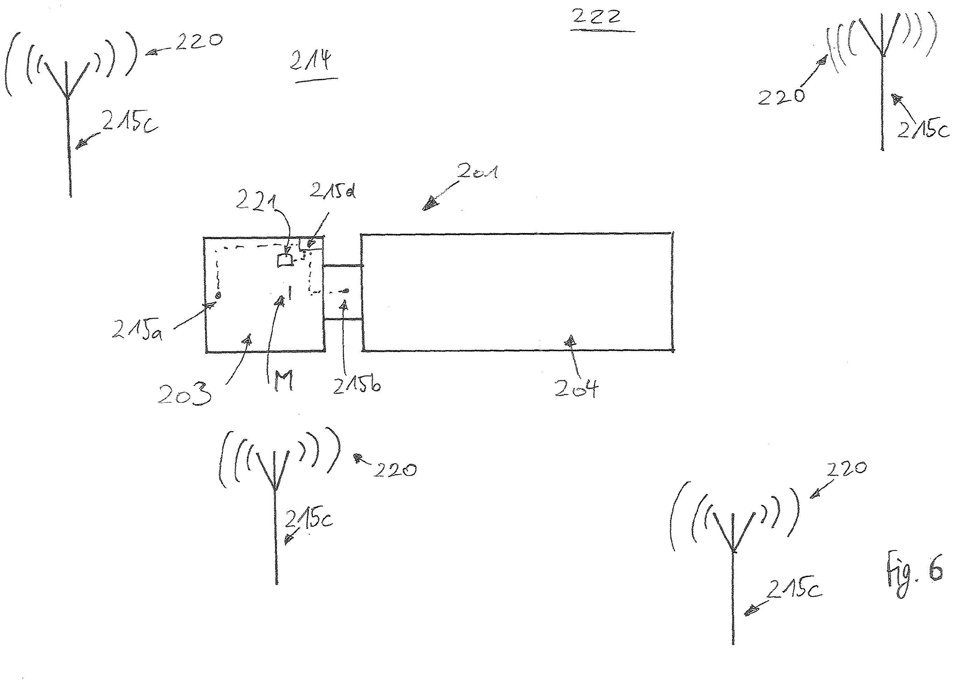

Die Figur 6 zeigt eine Draufsicht auf ein Transportfahrzeug 201 innerhalb eines schematisch dargestellten Funkortungssystems 214 mit aktiven Ortsmarken 215c. Das Funkortungssystem 214 ist in dem Terminal 223 aus Figur 5 beziehungsweise Figur 5a und insbesondere dessen jeweiligem Arbeitsbereich 222 eingerichtet.

Um einem Transportfahrzeug 201 innerhalb des Terminals 223 Fahranweisungen zur Verfügung stellen zu können, die neben einer aktuellen absoluten Position auch die aktuelle Ausrichtung des Transportfahrzeugs 201, das heißt zumindest der Zugmaschine 203 und gegebenenfalls auch des angekoppelten Anhängers 204, beinhalten, ist das Funkortungssystem 214 mit den aktiven Ortsmarken 215c und mindestens zwei Antennen 215a, 215b je Transportfahrzeug 201 vorgesehen. Dieses lokale Funkortungssystem 214 umfasst mehrere Ortsmarken 215c, welche in dem Arbeitsbereich 222 des Transportfahrzeugs 201 in dem Terminal 223 verteilt und somit terrestrisch angeordnet sind. Das Funkortungssystem 214 stimmt vom Aufbau mit dem in der Beschreibungseinleitung als Stand der Technik beschriebenen Funkortungssystem überein. In Bezug auf das Ausführungsbeispiel und die Erfindung wird somit inhaltlich hierauf Bezug genommen. Mit Hilfe des Funkortungssystems 214 wird neben der absoluten Position auch die Ausrichtung der Zugmaschine 203 bestimmt, da die Positionsdaten über die erste Antenne 215a und die zweite Antenne 215b ausgewertet werden. Die Antennen 215a und 215b empfangen getrennt voneinander jeweils Positionsdaten 220 von den Ortsmarken 215c, die dann von einem gemeinsamen Empfänger 215d empfangen und verarbeitet werden. Selbstverständlich kann aber auch jeweils ein Empfänger 215d für die Antenne 215a und ein Empfänger 215d für die Antenne 215b verwendet werden. Die verarbeiteten Positionsdaten werden von dem Empfänger 215d an einen Navigationsrechner 221 weitergeleitet, der hieraus dann Fahranweisungen für das Transportfahrzeug 201 bestimmt, beispielsweise zur automatischen Steuerung des Transportfahrzeugs 201 im Sinne eines fahrerlosen Verfahrens und Lenkens. Hierfür sind in dem Navigationsrechner 221 die Positionen der beiden Antennen 215a, 215b auf dem Transportfahrzeug 201 beziehungsweise der Zugmaschine 203 hinterlegt, um hieraus die aktuelle Ausrichtung des Transportfahrzeugs 201 bestimmen zu können. Um nicht nur die Ausrichtung der Zugmaschine 203, sondern auch eines angekoppelten Anhängers 204 bestimmen zu können, wertet der Navigationsrechner 221 auch die von einer Sensorik zur Ermittlung des Knickwinkels gelieferten Daten aus. Die Positionen der beiden Antennen 215a, 215b können mit Bezug zur Mitte M der Zugmaschine 203 hinterlegt sein. Der Navigationsrechner 221 berechnet aus den aktuellen Positionen der beiden Antennen 215a, 215b, welche beispielsweise jeweils eine x- und eine y-Koordinate in einem Koordinatensystem des Arbeitsbereichs 222 des Transportfahrzeugs 201 umfassen, eine Art Referenzposition der Zugmaschine 203 beziehungsweise deren Mitte M und eine Ausrichtung der Zugmaschine 203 beziehungsweise deren Längsachse im Sinne einer vorwärts gerichteten Fahrtrichtung F2 innerhalb des Koordinatensystems des Arbeitsbereichs 222. Diese Ausrichtung der Zugmaschine 203 entspricht einem Orientierungswinkel.

Im Folgenden wird die Erfindung anhand der Figuren 4 bis 6 erläutert. Das Transportfahrzeug 201 wird von dem Fahrer zu einer Aufnahme bzw. Abgabe eines Containers 202, beispielsweise an eine Containerbrücke 217 oder einen Container-Stapelkran 219 gefahren. Der Fahrer verfährt nach Übergabe eines Containers 202 das Transportfahrzeug 201 in eine gewünschte Position innerhalb eines Arbeitsbereichs 222. Dabei wird das Transportfahrzeug 201 vom Fahrer beispielsweise manuell auf die gewünschte Position gelenkt. Der Fahrer kann hierbei über das Funkortungssystem 214 mit Fahranweisungen unterstützt werden, das ihn über eine Anzeige mit Positionsdaten, Ausrichtungsdaten, Zielinformationen und Richtungsinformationen versorgt. Alternativ können neben einer manuellen Führung des Transportfahrzeugs 201 die Fahranweisungen des Funkortungssystems 214 auch für eine automatische Lenkung des Transportfahrzeugs 201 beispielsweise beim Anfahren von Containerbrücken 217 oder Container-Stapelkranen 219 verwendet werden oder auch bei automatisch geführten und somit fahrerlos betreibbaren Transportfahrzeugen 201. Hierbei wird durch die beabstandete Anordnung der Antennen 215a und 215b, sowie die Bestimmung von Positionsdaten 220 an zwei Punkten eine hohe Genauigkeit der Positionsbestimmung erreicht, welche eine präzise Steuerung des automatisch geführten Transportfahrzeugs 201 ermöglicht.

Ebenfalls möglich ist eine Navigation des Transportfahrzeugs 201 auf beziehungsweise entlang vorgegebenen Routen innerhalb des Arbeitsbereichs 222. Dabei werden die Positionsdaten 220 des Transportfahrzeugs 201 mit in dem Navigationsrechner 221 hinterlegten Streckeninformationen abgeglichen und bei Abweichung von der vorgegebenen Route kann eine Korrektur erfolgen. Dies kann entweder mit manueller aber bevorzugt mit automatischer Steuerung erfolgen.

### Bezugszeichenliste

101 Portalhubstapler
101a Portalrahmen
101b Fahrerkabine
101c Portalstützen
101d Oberseite des Portalrahmens
102 Spreader
103 Fahrträger
104 Fahrantriebe
105 erster Container
106 zweiter Container
107 Funkortungssystem
107a erste Antenne
107b zweite Antenne
107c Ortsmarken
107d Empfänger
108 Navigationsrechner
109 Längsverschubeinheit
110 Seitenverschubeinheit
111 Positionsdaten
112 Raum
201 Transportfahrzeug
202 Container
203 Zugmaschine
204 Anhänger
205 Räder
206 Flurfläche
206a erste Achse
206b zweite Achse
206c dritte Achse
207 Fahrgestell
208 Sattelplatte
209 Batterie
210 Rahmen
211 Ladefläche
211a Führungselemente
212 Fahrzeugsteuerung
213 Fahrerkabine
214 Funkortungssystem
215a erste Antenne
215b zweite Antenne
215c Ortsmarke
215d Empfänger
216 Kai
217 Containerbrücke
218 Container-Stapellager
218a Lagerbereich
219 Container-Stapelkran
220 Positionsdaten
221 Navigationsrechner
222 Arbeitsbereich
222a landseitiger Umschlagbereich
223 Terminal
223a Begrenzung
223b Passierbereich
224 Schiff
225 Transportfahrzeug
226 Schiene
a Abstand
F1 Vorwärtsfahrtrichtung
F2 Fahrtrichtung
H Hub-/Senkrichtung
L Längsgasse
M Mitte
Q1 Querrichtung
Q2 Quergasse
D Drehrichtung
V Vorderseite
R Hinterseite

## Patentansprüche

1. System zur Funkortung eines Transportfahrzeugs (101, 201) für Container (105, 106, 202) innerhalb eines Arbeitsbereichs (222) eines Containerterminals zum Umschlag von Containern, mit einem lokalen Funkortungssystem (107, 214) umfassend mehrere aktive terrestrisch angeordnete und Positionsdaten sendende Ortsmarken (107c, 215c), die Positionsdaten empfangende Antennen (107a, 107b, 215a, 215b), mindestens einen die empfangenen Positionsdaten verarbeitenden Empfänger (107d, 215d) und mit mindestens einem Transportfahrzeug (101, 201) mit mindestens einer der Antennen (107a, 107b, 215a, 215b) mit Empfänger (107d, 215d) und einem die Positionsdaten in Fahranweisungen für das Transportfahrzeug umsetzenden Navigationsrechner (108, 221), wobei das Transportfahrzeug ein Portalhubstapler (101) für Container (105, 106) oder eine Zugmaschine (203) für einen und/oder mit einem Anhänger (204) mit einer von Führungselementen begrenzten Ladefläche für Container (202) ist, **dadurch gekennzeichnet, dass** an dem Transportfahrzeug (101, 201) mindestens zwei der Antennen (107a, 107b, 215a, 215b) angeordnet sind, welche die von den Ortsmarken (107c, 215c) gesendeten Positionsdaten jeweils getrennt voneinander empfangen, wobei die mindestens zwei Antennen (107a, 107b, 215a, 215b) voneinander beabstandet sind und der Navigationsrechner (108, 221) neben der Position des Transportfahrzeugs (101, 201) auch die Ausrichtung des Transportfahrzeugs (101, 201) aus den Positionsdaten der mindestens zwei Antennen (107a, 107b, 215a, 215b) ermittelt.

2. System nach Anspruch 1, **dadurch gekennzeichnet, dass** die Ortsmarken (107c, 215c) Positionssignale als vorbestimmte Sequenzen mit einem Zeitmultiplexverfahren aussenden.

3. System nach Anspruch 1 oder 2, **dadurch gekennzeichnet, dass** die Antenne (107a, 107b, 215a, 215b) als TDMA adaptive Richtantenne ausgebildet ist.

## Claims

1. System for radiolocation of a transport vehicle (101, 201) for containers (105, 106, 202) within a working area (222) of a container terminal for handling containers, having a local radiolocation system (107, 214) comprising a plurality of active terrestrially arranged location markers (107c, 215c) transmitting position data, antennas (107a, 107b, 215a, 215b) receiving the position data, at least one receiver (107d, 215d) receiving the position data and with at least one transport vehicle (101, 201) with at least one of the antennas (107a, 107b, 215a, 215b) with receiver (107d, 215d) and a navigation computer (108, 221) converting the position data into driving instructions for the transport vehicle, wherein the transport vehicle is a straddle carrier (101) for containers (105, 106) or a tractor (203) for and/or with a trailer (204) with a loading area for containers (202) delimited by guide elements, **characterized in that** at least two of the antennas (107a, 107b, 215a, 215b) are arranged on the transport vehicle (101, 201), which each separately receive the position data sent by the position markers (107c, 215c), the at least two antennas (107a, 107b, 215a, 215b) being spaced apart from one another and the navigation computer determining not only the position of the transport vehicle (101, 201) but also the orientation of the transport vehicle (101, 201), 215b) are spaced apart, and the navigation computer (108, 221) determines both the position of the transport vehicle (101, 201) and the orientation of the transport vehicle (101, 201) from the position data of the at least two antennas (107a, 107b, 215a, 215b).

2. System according to claim 1, **characterized in that** the position markers (107c, 215c) transmit position signals in the form of predetermined sequences using a time-division multiplexing method.

3. System according to claim 1 or 2, **characterized in that** the antenna (107a, 107b, 215a, 215b) is configured as an TDMA adaptive directional antenna.

## Revendications

1. Système de localisation radio d'un véhicule de transport (101, 201) destiné à des conteneurs (105, 106, 202) à l'intérieur d'une zone de travail (222) d'un terminal à conteneurs afin de transférer des conteneurs, ledit système comprenant un système de localisation radio local (107, 214) pourvu de plusieurs repères de localisation actifs terrestres et émettant des données de position (107c, 215c), des antennes (107a, 107b, 215a, 215b) qui reçoivent les données de position, au moins un récepteur (107d, 215d) qui traitent les données de position reçues et comprenant au moins un véhicule de transport (101, 201) équipé d'au moins une des antennes (107a, 107b, 215a, 215b), d'un récepteur (107d, 215d) et d'un ordinateur de navigation (108, 221) qui convertit les données de position en instructions de conduite du véhicule de transport, le véhicule de transport étant un chariot élévateur cavalier (101) destiné à des conteneurs (105, 106) ou un tracteur (203) destiné à une remorque et/ou comportant une remorque (204) pourvue d'une zone de chargement de conteneurs (202) qui est délimitée par des éléments de guidage, **caractérisé en ce qu'**au moins deux des antennes (107a, 107b, 215a, 215b) sont disposées sur le véhicule de transport (101, 201), lesquelles reçoivent chacune séparément les données de position envoyées par les repères de localisation (107c, 215c), les au moins deux antennes (107a, 107b, 215a, 215b) étant espacées l'une de l'autre et l'ordinateur de navigation (108, 221) déterminant non seulement la position du véhicule de transport (101, 201), mais également l'orientation du véhicule de transport (101, 201) à partir des données de position des au moins deux antennes (107a, 107b, 215a, 215b).

2. Système selon la revendication 1, **caractérisé en ce que** les repères de localisation (107c, 215c) émettent des signaux de position sous la forme de séquences prédéterminées à l'aide d'un procédé de multiplexage temporel.

3. Système selon la revendication 1 ou 2, **caractérisé en ce que** l'antenne (107a, 107b, 215a, 215b) est conçue comme une antenne directionnelle adaptative TDMA.
